(19) Europäisches Patentamt
European Patent Office
Office européen des brevets

(11) **EP 1 265 191 B1**

(12) **FASCICULE DE BREVET EUROPEEN**

(45) Date de publication et mention
de la délivrance du brevet:
**11.06.2008   Bulletin 2008/24**

(51) Int Cl.:
***G06F 3/033*** *(2006.01)*

(21) Numéro de dépôt: **02291347.9**

(22) Date de dépôt: **03.06.2002**

(54) **Dispositif et procédé de localisation de la pointe d'un stylo sur un support de numérisation**

Vorrichtung und Verfahren zur Ortung einer Schreibspitze auf einem Digitalisiertablett

Device and method for locating a pen tip on a digitizer tablet

(84) Etats contractants désignés:
**DE GB IT**

(30) Priorité: **05.06.2001   FR 0107322**

(43) Date de publication de la demande:
**11.12.2002   Bulletin 2002/50**

(73) Titulaire: **COMMISSARIAT A L'ENERGIE ATOMIQUE**
**75015 Paris (FR)**

(72) Inventeur: **Duret, Denis**
**38100 Grenoble (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 215 695          EP-A- 0 517 078**
**US-A- 5 418 712**

• **PATENT ABSTRACTS OF JAPAN vol. 1996, no. 10, 31 octobre 1996 (1996-10-31) & JP 08 152955 A (OKI ELECTRIC IND CO LTD), 11 juin 1996 (1996-06-11)**

## Description

### Domaine technique

L'invention concerne un dispositif et un procédé de localisation d'une pointe d'un stylo sur un support d'écriture, le stylo et le support faisant partie du dispositif de localisation qui comporte en outre au moins deux dipôles magnétiques couplés chacun à une source de courant de manière à produire des champs magnétiques distincts, perpendiculaires au plan du support.

L'invention concerne également un système de numérisation d'écriture et un stylo destiné à être utilisé dans un tel système.

L'invention trouve des applications dans les ordinateurs portables, les agendas électroniques, ou encore dans les téléconférences au cours desquelles le contenu d'un texte manuscrit doit être envoyé en temps réel à plusieurs personnes communiquant à travers un réseau de type internet.

### Etat de la technique antérieure

Un dispositif connu de localisation de la pointe d'un stylo dans un système de numérisation d'écriture comporte une table numérique munie de moyens pour transformer les positions du stylo en données numériques qui sont ensuite, soit stockées dans une mémoire couplée à la table, soit transmises par voie radio à un ordinateur qui comporte un logiciel de traitement destiné à décoder les données numériques pour obtenir les codes alphanumériques correspondants.

La localisation de la pointe du stylo dans ce dispositif est obtenue grâce à un système de coordonnées prédéfini sur la surface de la table numérique.

Un inconvénient de ce dispositif provient du fait que cette localisation n'est possible que sur la table spécifiquement conçue à cet effet.

EP-A-0 215 695 divulgue (fig 5) un dispositif de saisie d'écriture comprenant un support de saisie, un stylo comprenant un dipôle magnétique constitué par un enroulement excité par un générateur de courant alternatif ayant une fréquence déterminée, et deux ensembles de mesure E1,E2 disposés de part et d'autre du support de saisie. Chaque ensemble comprend trois magnétomètres directionnels reliés à un organe de calcul qui détermine les coordonnés du dipôle.

Un autre dispositif connu décrit dans le document WO 99/39302 utilise une caméra associée au stylo et un algorithme de suivi des mouvements du stylo. Ce dispositif est coûteux et l'algorithme mis en oeuvre est complexe.

Le but de l'invention est de remédier aux inconvénients de l'art antérieur décrit ci-dessus au moyen d'un dispositif de localisation de la pointe d'un stylo sur un support quelconque placé dans un champ magnétique généré par au moins deux dipôles.

Selon l'invention, le dispositif est caractérisé en ce que le stylo comporte un premier capteur destiné à mesurer les champs magnétiques produits par chacun des dipôles magnétiques et un deuxième capteur destiné à mesurer l'angle d'inclinaison θ de l'axe du stylo par rapport à la verticale et des moyens de transmission de données en provenance desdits premier et deuxième capteurs vers une unité de traitement apte à calculer la position de la pointe du stylo sur la surface du support d'écriture en fonction des valeurs mesurées des champs magnétiques et de l'angle θ.

Selon l'invention, l'unité de traitement comporte un logiciel permettant de calculer par triangulation les positions de la pointe du stylo par rapport à la position de chacun desdits dipôles magnétiques.

Selon l'invention, les dipôles magnétiques sont alimentés simultanément par des courants périodiques ayant des fréquences différentes.

Selon l'invention, les dipôles magnétiques sont alimentés séquentiellement par un même courant qui peut être continu ou périodique.

Selon l'invention, le logiciel de calcul est apte à distinguer les champs magnétiques produits par chaque dipôle en fonction de la fréquence d'alimentation de chaque dipôle.

Selon l'invention, le logiciel de calcul est apte à distinguer les champs magnétiques produits par chaque dipôle en fonction de l'instant d'alimentation de chaque dipôle.

Selon l'invention, le premier capteur est un magnétomètre, et le deuxième capteur est un accéléromètre apte à mesurer le champ de pesanteur.

Selon l'invention, le stylo comporte les caractéristiques définies par la revendication 12.

Le procédé selon l'invention comporte les étapes suivantes :

- mesurer au moins deux champs magnétiques générés par au moins deux dipôles sur le support d'écriture ;
- mesurer l'inclinaison θ du stylo par rapport à la verticale ;
- calculer la distance entre le stylo et la position de chaque dipôle magnétique, en fonction des valeurs mesurées des champs magnétiques et de l'inclinaison θ du stylo.

Le procédé comporte en outre une étape consistant à détecter le contact de la pointe du stylo sur le support de numérisation et à mesurer la force d'appui de ladite pointe sur ledit support.

D'autres caractéristiques et avantages de l'invention ressortiront de la description qui va suivre, prise à titre d'exemple non limitatif, en référence aux figures annexées dans lesquelles :

- la figure 1 représente schématiquement un système de numérisation d'écriture comportant un dispositif de localisation selon l'invention.

- la figure 2 illustre schématiquement un stylo utilisé dans un système de numérisation illustré par la figure 2.
- la figure 3 représente schématiquement un système de génération de champs magnétiques selon un mode de réalisation de l'invention ;
- la figure 4 illustre schématiquement les champs magnétiques générés par le dispositif de la figure 2.

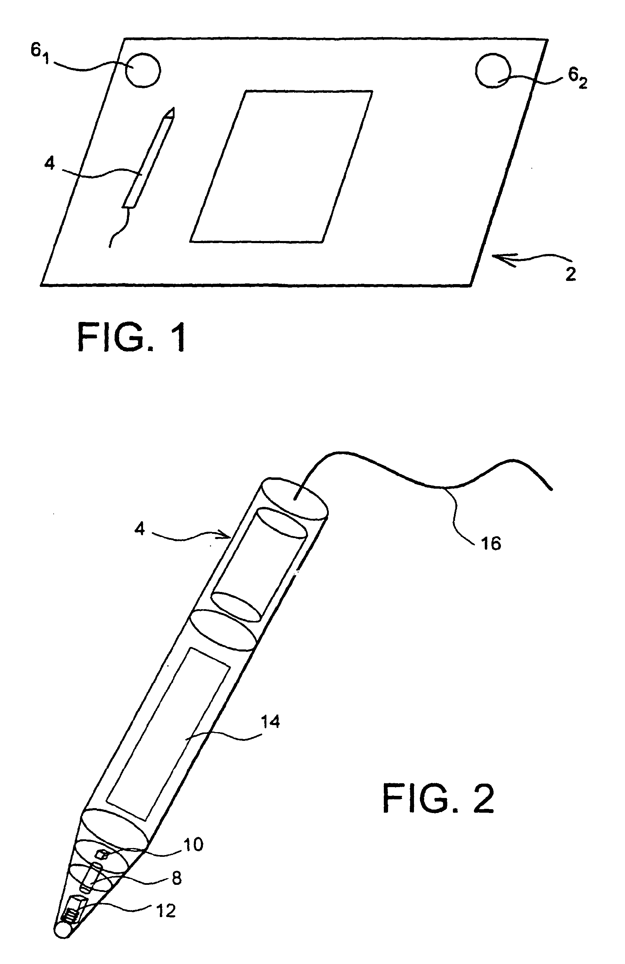

Le système de numérisation de la figure 1 comporte un support d'écriture 2, qui peut être horizontal, vertical ou incliné d'un angle quelconque par rapport à la verticale, sur lequel un utilisateur peut écrire au moyen d'un stylo 4. Ce support 2 comporte deux dipôles magnétiques d'axes perpendiculaires au support $6_1$, $6_2$ destinés chacun à générer un champ magnétique dans la direction du stylo 4.

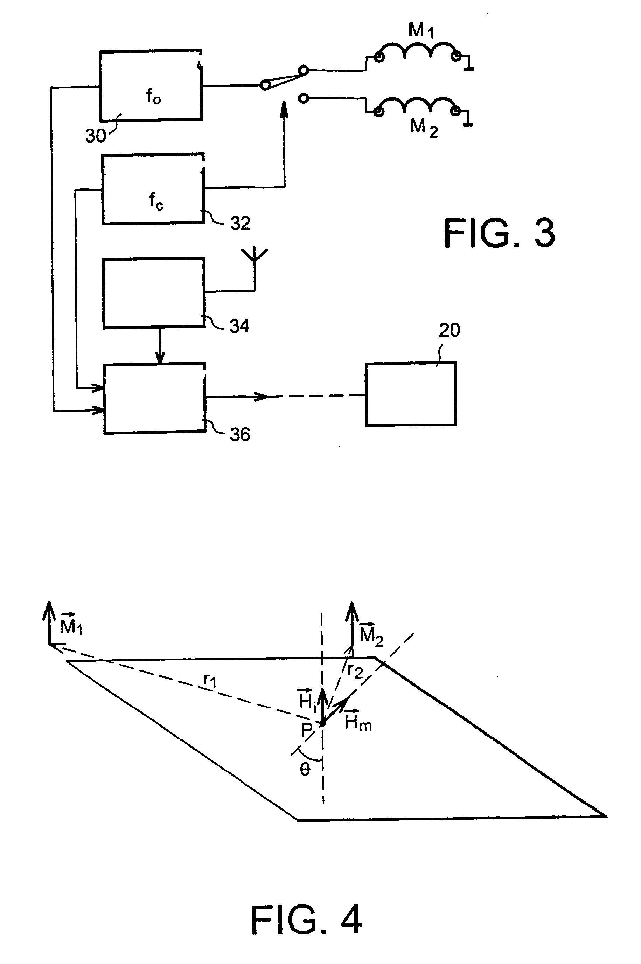

Comme on peut le voir à la figure 2, le stylo 4 comporte un magnétomètre 8 destiné à mesurer les champs magnétiques générés par les dipôles $6_1$, $6_2$, un inclinomètre 10 destiné à mesurer l'angle d'inclinaison $\theta$ de l'axe du stylo 4 par rapport à la verticale, un capteur de force 12 destiné à mesurer la force d'appui du stylo sur la support 2, et un circuit électronique de traitement 14 destiné à coder les valeurs de champs magnétiques, de l'angle d'inclinaison $\theta$, et de la force d'appui mesurées. Le circuit électronique 14 est relié à une antenne 16 qui transmet les données codées, en provenance du circuit électronique 14, vers une unité de traitement 20 (figure 3) apte à calculer la position de la pointe du stylo 4 sur la surface du support d'écriture 2.

Préférentiellement, les dipôles magnétiques $6_1$, $6_2$ sont des bobines cylindriques ayant une section S, un diamètre de l'ordre d'un centimètre et une longueur également de l'ordre d'un centimètre. Chaque bobine comporte un nombre n de spires, typiquement égal à cent, parcourues par un courant électrique i.

La figure 3 illustre un schéma bloc d'un circuit de commande des dipôles $6_1$, $6_2$ pour générer deux champs magnétiques distincts à l'emplacement du stylo 4. Ce circuit de commande comporte un oscillateur 30, un commutateur 32, un circuit de réception 34 et un circuit de décodage 36.

Selon une variante de réalisation, les bobines $6_1$, $6_2$ sont alimentées séquentiellement à travers le commutateur 32 par un courant de fréquence $f_o$ égale à 100 kHz, le commutateur 32 réalisant une commutation toutes les 10 ms.

Dans une deuxième variante de réalisation, les bobines $6_1$, $6_2$ sont alimentées par deux courants ayant des fréquences différentes.

Sur la figure 4, $M_1$ et $M_2$ représentent respectivement les positions des dipôles $6_1$ et $6_2$ sur le support 2, P représente la position de la pointe du stylo sur le support 2, $H_i$ représente le champ magnétique crée au point P selon la direction de l'axe du stylo par un dipôle $6_i$.

Dans le cas particulier où le support 2 est horizontal et où le stylo 4 est incliné d'un angle $\theta$ par rapport à la verticale, la valeur de la projection du champ magnétique crée par un dipôle $6_i$ au point P est donné par :

$$H_{mi} = H_i \cos \theta = M/r^3 \cos \theta$$

où
$\vec{M}_i$ est le moment dipolaire du dipôle $6_i$ donné par l'expression :
$M_i = niS$ si le dipôle est une bobine à n spires de section S et parcourue par un courant i.

Connaissant $M_i$, $H_{mi}$, et $\cos \theta$, et en séparant le champ des deux dipôles $6_1$ et $6_2$, il est possible d'obtenir les distances $r_1$ et $r_2$ du point P par rapport aux deux points $M_1$ et $M_2$ et donc la position de la pointe du stylo par triangulation.

Dans le cas particulier où le support 2 est vertical,

$$H_{mi} = H_i \sin \theta = M/r^3 \sin \theta$$

Un calcul identique permet d'obtenir les distances $r_1$ et $r_2$ et donc la position de la pointe du stylo par rapport aux deux points $M_1$ et $M_2$.

Dans le cas particulier où le support 2 est incliné d'un angle quelconque par rapport à l'horizontal $H_{mi} = H_i \sin \delta = M/r^3 \sin \delta$ où $\delta = 0 - \alpha$, $\alpha$ étant l'angle d'inclinaison du support par rapport à l'horizontale.

Les valeurs mesurées du champ magnétique, de l'inclinaison de l'axe du stylo et de la force d'appui sont transmises par radio ou par une liaison filaire à l'unité de traitement 20 qui reçoit des signaux numériques proportionnels aux valeurs des champs magnétiques $H_{m1}$ et $H_{m2}$ mesurés par le magnétomètre en utilisant le signal de synchronisme du commutateur 32.

Les dipôles $6_1$ et $6_2$ sont implantés en des points connus par rapport à la surface du support 2.

Selon le mode de réalisation préféré de l'invention, le magnétomètre 8 est logé dans le corps du stylo et est constitué par une bobine d'induction comprenant quelques centaines de spires. L'inclinomètre 10 est un accéléromètre permettant de mesurer la valeur du champ de pesanteur projetée sur l'axe du stylo, le capteur de force 12 est un capteur piézoélectrique.

Le calcul de la position de la pointe sur le support 2 n'est effectué que lorsque la force mesurée par le capteur piézoélectrique 12 est supérieure à un seuil prédéterminé. En outre, l'analyse de la force d'appui de la pointe sur le support 2 fournit des informations calligraphiques (pleins et déliés) de l'écriture. Dans le cas d'une reconnaissance de signature, cette information améliore la fiabilité de la reconnaissance.

Selon un autre mode de réalisation de l'invention, l'unité de traitement est intégrée dans le corps du stylo et comporte en outre une mémoire destinée à stocker les positions successives calculées de la pointe du stylo. Ce dernier comporte une interface permettant de transférer de façon différée les valeurs mémorisées dans cette mémoire vers un micro-ordinateur.

## Revendications

1. Dispositif de localisation d'une pointe d'un stylo (4) sur un support d'écriture (2), le stylo (4) et le support (2) faisant partie du dispositif de localisation qui comporte en outre au moins deux dipôles magnétiques (6) couplés chacun à une source de courant de manière à produire des champs magnétiques distincts perpendiculaires au plan du support (2), **caractérisé en ce que** ledit stylo (4) comporte un premier capteur (8) destiné à mesurer les champs magnétiques produits par chacun des dipôles magnétiques et un deuxième capteur (10) destiné à mesurer l'angle d'inclinaison θ de l'axe du stylo (4) par rapport à la verticale et des moyens de transmission (16) de données en provenance desdits premier (8) et deuxième (10) capteurs vers une unité de traitement (20) apte à calculer la position de la pointe du stylo (4) sur la surface du support d'écriture (2) en fonction des valeurs mesurées des champs magnétiques et de l'angle θ.

2. Dispositif selon la revendication 1, **caractérisé en ce que** le stylo (4) comporte en outre un troisième capteur destiné à détecter le contact de la pointe du stylo sur le support d'écriture (2) et à mesurer la force d'appui de ladite pointe sur ledit support (2).

3. Dispositif selon la revendication 1, **caractérisé en ce que** l'unité de traitement (20) comporte un logiciel permettant de calculer, par triangulation, les positions de la pointe du stylo (4) par rapport à chacun desdits dipôles (6).

4. Dispositif selon la revendication 1, **caractérisé en ce que** les dipôles magnétiques (6) sont alimentés simultanément par des courants périodiques ayant des fréquences différentes.

5. Dispositif selon la revendication 1, **caractérisé en ce que** les dipôles magnétiques (6) sont alimentés séquentiellement par un même courant.

6. Dispositif selon la revendication 5, **caractérisé en ce que** le courant d'alimentation desdits dipôles est continu.

7. Dispositif selon la revendication 5, **caractérisé en ce que** le courant d'alimentation desdits dipôles est pério alternatif.

8. Dispositif selon la revendication 3, **caractérisé en ce que** le logiciel de calcul est apte à distinguer les champs magnétiques produits par chaque dipôle (6) en fonction de la fréquence d'alimentation de la bobine de chaque dipôle (6).

9. Dispositif selon la revendications 3, **caractérisé en ce que** le logiciel de calcul est apte à distinguer les champs magnétiques produits par chaque dipôle (6) en fonction de l'instant d'alimentation de la bobine de chaque dipôle (6).

10. Dispositif selon la revendication 1, **caractérisé en ce que** le premier capteur (8) est un magnétomètre et le deuxième capteur (10) est un accéléromètre apte à mesurer le champ de pesanteur.

11. Système de numérisation d'écriture, **caractérisé en ce qu'**il comporte un dispositif de localisation selon l'une quelconque des revendications 1 à 10.

12. Stylo (4) destiné à être utilisé dans un système de numérisation d'écriture, **caractérisé en ce que** le style comporte un premier capteur (8) destiné à mesurer les champs magnétiques produits par au moins deux dipôles magnétiques (6), un deuxième capteur (10) destiné à mesurer l'angle d'inclinaison θ de l'axe du stylo (4) par rapport à la verticale, et un troisième capteur (12) destiné à détecter le contact de la pointe du stylo (4) sur un support d'écriture (2) et à mesurer la force d'appui de ladite pointe sur ledit support (2).

13. Procédé de localisation de la pointe d'un stylo (4) sur un support d'écriture (2), le stylo (4) et le support (2) faisant partie d'un système de numérisation d'écriture, **caractérisé en ce qu'**il comporte les étapes suivantes :

   - mesurer au moins deux champs magnétiques générés par au moins deux dipôles (6) sur le support d'écriture (2) ;
   - mesurer l'inclinaison θ du stylo (4) par rapport à la verticale ;
   - calculer la distance entre le stylo (4) et chaque dipôle magnétique (6) en fonction des valeurs mesurées des champs magnétiques et de l'inclinaison θ du stylo (4).

14. Procédé selon la revendication 13, **caractérisé en ce qu'**il comporte en outre une étape consistant à détecter le contact de la pointe du stylo sur le support (2) et à mesurer la force d'appui de ladite pointe sur ledit support (2).

## Claims

1. Device for locating the tip of a pen (4) on a writing board (2), the pen (4) and the board (2) being part of the locating device, which also comprises at least two magnetic dipoles (6) each coupled to a current source so as to produce distinct magnetic fields perpendicular to the plane of board (2), **characterized in that** the said pen (4) includes a first sensor (8) for measuring the magnetic fields generated by each magnetic dipole and a second sensor (10) for measuring the inclination angle θ of the axis of pen (4) with respect to the vertical and transmission means (16) for delivering data supplied by the said first (8) and second (10) sensors to a processing unit able to calculate the position of pen tip (4) on the surface of the writing board (2) as a function of the measured values of the magnetic fields and the angle θ.

2. Device according to claim 1, **characterized in that** the pen (4) further comprises a third sensor for detecting the contact of the pen tip with the writing board (2) and measuring the contact force of said tip on the said board (2).

3. Device according to claim 1, **characterized in that** the processing unit (20) is provided with a software which calculates by triangulation the positions of the tip of pen (4) with respect to said dipoles (6).

4. Device according to claim 1, **characterized in that** the magnetic dipoles are concurrently supplied with alternating currents whose frequencies are different.

5. Device according to claim 1, **characterized in that** the magnetic dipoles (6) are sequentially supplied by the same current.

6. Device according to claim 5, **characterized in that** the supply current of the said dipoles is a direct current.

7. Device according to claim 5, **characterized in that** the supply current of the said dipoles is an alternating current.

8. Device according to claim 3, **characterized in that** the calculation software is able to discriminate the magnetic fields induced by each dipole (6) according to the frequency of the coil supply current of each dipole (6).

9. Device according to claim 3, **characterized in that** the calculation software is able to discriminate the magnetic fields induced by each dipole (6) according to the coil supply time of each dipole (6).

10. Device according to claim 1, **characterized in that** the first sensor (8) is a magnetometer and the second sensor (10) is an accelerometer able to measure the gravity field.

11. Writing digitizing system, **characterized in that** it incorporates a locating device according to any one of the claims 1 to 10.

12. Pen (4) intended for being used by a writing digitizing system, **characterized in that** the pen includes a first sensor (8) for measuring the magnetic fields created by at least two magnetic dipoles (6), a second sensor (10) for measuring the inclination angle θ of the axis of pen (4) with respect to the vertical and a third sensor (12) for detecting the contact of the tip of pen (4) with the writing board (2) and measuring the contact force of said tip on said board (2).

13. Process for locating the tip of a pen (4) on a writing board (2), the pen (4) and the board (2) being part of a writing digitizing system, **characterized in that** it comprises the steps of:

- measuring at least two magnetic fields generated by at least two dipoles (6) on the writing board (2);
- measuring the inclination θ of pen (4) with respect to the vertical;
- calculating the distance between pen (4) and each magnetic dipole (6) as a function of measured values of the magnetic fields and of the inclination θ of pen (4).

14. Process according to claim 13, **characterized in that** it also comprises the step of detecting the contact of the pen tip with the support (2) and measuring the contact force of said tip on said support (2).

**Patentansprüche**

1. Vorrichtung zur Ortung einer Spitze eines Schreibstifts (4) auf einem Schreibtablett (2), wobei der Schreibstift (4) und das Tablett (2) Teil der Ortungsvorrichtung sind, die außerdem wenigstens zwei magnetische Dipole (6) umfasst, von denen jeder mit einer Stromquelle verbunden ist, um unterschiedliche zur Ebene des Tabletts (2) senkrechte Magnetfelder zu erzeugen,
**dadurch gekennzeichnet, dass** der genannte Schreibstift (4) einen ersten Sensor (8) umfasst, dazu bestimmt, die durch jeden der magnetischen Dipole erzeugten Magnetfelder zu messen, und einen zweiten Sensor (10), dazu bestimmt, den Neigungswinkel θ der Achse des Schreibstifts (4) in Bezug auf die Vertikale zu messen, und Einrichtungen (16) zur Übertragung der von dem ersten (8) und zweiten (10) Sensor stammenden Daten zu einer Verarbeitungseinheit (20), fähig die Position der Spitze des Schreibstifts (4) auf der Oberfläche des Schreibtabletts (2) in Abhängigkeit von den gemessenen Werten der Magnetfelder und des Winkels θ zu berechnen.

2. Vorrichtung nach Anspruch 1, **dadurch gekennzeichnet, dass** der Schreibstift (4) außerdem einen dritten Sensor umfasst, dazu bestimmt, den Kontakt der Spitze des Schreibstifts auf dem Schreibtablett (2) zu detektieren und die durch die genannte Spitze auf des genannte Tablett (2) ausgeübte Andrückkraft zu messen.

3. Vorrichtung nach Anspruch 1, **dadurch gekennzeichnet, dass** die Verarbeitungseinheit (20) eine Software umfasst, die ermöglicht, durch Triangulation die Positionen der Spitze des Schreibstifts (4) in Bezug auf jeden der genannten Dipole (6) zu berechnen.

4. Vorrichtung nach Anspruch 1, **dadurch gekennzeichnet, dass** die magnetischen Dipole (6) simultan mit periodischen Strömen versorgt werden, die unterschiedliche Frequenzen haben.

5. Vorrichtung nach Anspruch 1, **dadurch gekennzeichnet, dass** die magnetischen Dipole (6) sequentiell mit einem gleichen Strom versorgt werden.

6. Vorrichtung nach Anspruch 5, **dadurch gekennzeichnet, dass** der Versorgungsstrom der genannten Dipole kontinuierlich ist bzw. ein Gleichstrom ist.

7. Vorrichtung nach Anspruch 5, **dadurch gekennzeichnet, dass** der Versorgungsstrom der genannten Dipole ein periodischer Wechselstrom (pério alternatif) ist.

8. Vorrichtung nach Anspruch 3, **dadurch gekennzeichnet, dass** die Rechensoftware fähig ist, die durch jeden Dipol (6) erzeugten Magnetfelder in Abhängigkeit von der Versorgungsfrequenz der Spule jedes Dipols (6) zu unterscheiden.

9. Vorrichtung nach Anspruch 3, **dadurch gekennzeichnet, dass** die Rechensoftware fähig ist, die durch jeden Dipol (6) erzeugten Magnetfelder in Abhängigkeit von dem Versorgungszeitpunkt der Spule jedes Dipols (6) zu unterscheiden.

10. Vorrichtung nach Anspruch 1, **dadurch gekennzeichnet, dass** der erste Sensor (8) ein Magnetometer ist und der zweite Sensor (10) ein Beschleunigungsmesser, fähig das Schwerefeld zu messen.

11. Schriftdigitalisierungssystem, **dadurch gekennzeichnet, dass** es eine Ortungsvorrichtung nach einem der Ansprüche 1 bis 10 umfasst.

12. Schreibstift (4), dazu bestimmt, in einem Schriftdigitalisierungssystem verwendet zu werden, **dadurch gekennzeichnet, dass** der Schreibstift einen ersten Sensor (8) zur Messung der durch mindestens zwei magnetische Dipole (6) erzeugten Magnetfelder, einen zweiten Sensor (10) zur Messung des Neigungswinkels θ der Achse des Schreibstifts (4) in Bezug auf die Vertikale und einen dritten Schreibstift (12) umfasst, der dazu bestimmt ist, den Kontakt der Spitze des Schreibstifts (4) auf dem Schreibtablett (2) zu detektieren und die durch die genannte Spitze des Schreibstifts (4) auf das genannte Tablett (2) ausgeübte Andrückkraft zu messen.

13. Verfahren zur Ortung der Spitze eines Schreibstifts (4) auf einem Schreibtablett (2), wobei der Schreibstift (4) und das Tablett (2) Teil eines Schriftdigitalisierungssystems sind, **dadurch gekennzeichnet, dass** es die folgenden Schritte umfasst:

    - Messung von mindestens zwei Magnetfeldern, in dem Schreibtablett (2) erzeugt von mindestens zwei Dipolen (6);
    - Messung der Neigung θ des Schreibstifts (4) in Bezug auf die Vertikale;
    - Berechnung des Abstands zwischen dem Schreibstift (4) und jedem magnetischen Dipol (6) in Abhängigkeit von den gemessenen Werten der Magnetfelder und der Neigung θ des Schreibstifts (4).

14. Verfahren nach Anspruch 13, **dadurch gekennzeichnet, dass** es außerdem einen Schritt umfasst, der darin besteht, den Kontakt der Spitze des Schreibstifts auf dem Tablett (2) zu detektieren und die durch die genannte Spitze auf das genannte Tablett (2) ausgeübte Andrückkraft zu messen.

FIG. 1

FIG. 2

FIG. 3

FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0215695 A

- WO 9939302 A